Europäisches Patentamt

**European Patent Office**

Office européen des brevets

(19)

(11) Numéro de publication : **0 277 447 B1**

(12)

# FASCICULE DE BREVET EUROPEEN

(45) Date de publication du fascicule du brevet :
**27.02.91 Bulletin 91/09**

(51) Int. Cl.⁵ : **G01P 3/42**

(21) Numéro de dépôt : **87403008.3**

(22) Date de dépôt : **30.12.87**

(54) **Système de repérage du mouvement d'un véhicule à chenilles.**

(30) Priorité : **05.01.87 FR 8700016**

(43) Date de publication de la demande :
**10.08.88 Bulletin 88/32**

(45) Mention de la délivrance du brevet :
**27.02.91 Bulletin 91/09**

(84) Etats contractants désignés :
**AT BE CH DE ES GB GR IT LI LU NL SE**

(56) Documents cités :
**EP-A- 0 038 606
FR-A- 2 302 901**

(73) Titulaire : **PROTEE Groupement d'Intérêt
Economique
159, Boulevard de la Villette
F-75010 Paris (FR)**

(72) Inventeur : **Clément, Gilles
118, rue d'Avron
F-75020 Paris (FR)**
Inventeur : **Detriche, Jean-Marie
6, Résidence La Gaillarderie
F-78590 Noisy Le Roi (FR)**
Inventeur : **Villedieu, Eric
148, rue de Paris
F-91128 Palaiseau (FR)**

(74) Mandataire : **Mongrédien, André et al
c/o BREVATOME 25, rue de Ponthieu
F-75008 Paris (FR)**

**Description**

La présente invention a pour objet un système de repérage du mouvement d'un véhicule à chenilles, notamment d'un robot télécommandé ou à déplacement programmé.

L'emploi de chenilles est courant pour permettre l'évolution de véhicules militaires, industriels et de robots tels que ceux utilisés par exemple pour l'industrie nucléaire. Une bonne adhérence au sol ainsi qu'une conception robuste et fiable caractérisent en effet de tels véhicules. Un inconvénient apparaît toutefois pour les véhicules mus sans intervention humaine, notamment pour les robots à trajectoire prédéfinie.

En effet, les virages sont commandés selon des vitesses de rotation différentes, en intensité et éventuellement en sens, pour les roues motrices des deux chenilles. Des frottements aléatoires entre les chenilles et le sol apparaissent, si bien qu'il est impossible de déterminer le centre de pivotement du véhicule. La perte de précision ainsi réalisée sur la position du véhicule ne peut être acceptée.

Il faut aussi ajouter que, même dans un déplacement rectiligne, les chenilles peuvent patiner si l'adhérence au sol devient trop faible ; la transmission du mouvement engendré par le moteur n'est plus assurée.

Même avec un sol suffisamment adhérent, on ne peut d'ailleurs éviter des petits mouvements de rotation, qui sont compensés par la régulation de vitesse des moteurs des chenilles mais qui peuvent les conduire à patiner.

Le mouvement des roues motrices et des chenilles ne peut donc pas caractériser la trajectoire du véhicule sur le sol. On doit en tenir compte dans le choix des capteurs utilisés dans les asservissements pour le repérage de position et de vitesse du véhicule.

La manoeuvrabilité du véhicule et notamment sa facilité à pivoter au cours d'un virage peut être améliorée en relevant légèrement les parties avant et arrière des chenilles comme il est décrit dans le brevet français FR-A-2 302 901 : la partie de la chenille proche du sol est maintenue courbe à l'aide d'une barre de Téflon qui frotte sur la surface intérieure de la chenille de manière à ce que la convexité de cette dernière soit orientée vers le bas ; l'action de la barre peut aussi être complétée, au moins sur une partie de la longueur de la chenille, par des roulettes. Toutefois, cette conception ne permet pas de connaître avec précision l'axe de pivotement du véhicule et s'accompagne d'une perte de traction au sol qui n'est admissible que parce que le véhicule est muni de chenilles supplémentaires que l'on peut relever aux virages.

La présente invention a pour but de remédier aux inconvénients des dispositifs connus et notamment de réaliser un système de repérage de mouvement d'un véhicule à chenilles combinant un moyen pour assurer la position de l'axe de pivotement du véhicule à deux capteurs de vitesse placés au niveau de l'axe de pivotement qui mesurent les évolutions du véhicule sur le sol.

La combinaison de deux capteurs espacés latéralement et mesurant séparément la progression sur le sol du véhicule permet, par comparaison de leurs informations, de déduire les mouvements d'avance et de rotation de ce véhicule.

Ces capteurs sont de préférence des roues codeuses d'axe de rotation parallèle au sol qui roulent sans glisser sur le sol et qui présentent le double avantage de fournir des informations facilement exploitables, contrairement aux boules codeuses à deux informations, et de pouvoir mesurer avec précision les marches arrière de l'engin car elles sont réversibles.

De façon plus précise, l'invention a pour objet un système de repérage de mouvement d'un véhicule à chenilles, caractérisé en ce qu'il comprend sur chaque chenille un moyen pour améliorer en un point l'adhérence de la chenille par rapport au sol, et un capteur de vitesse solidaire du véhicule, ledit capteur mesurant la vitesse de ce véhicule par rapport au sol en un point situé à proximité du point d'amélioration d'adhérence de la chenille, et un moyen de déduire le mouvement du véhicule par comparaison des informations recueillies par les divers capteurs.

Dans ce mode de réalisation, le moyen pour améliorer l'adhérence comprend une roue d'amélioration d'adhérence, d'axe parallèle au sol et perpendiculaire à la direction de déplacement des chenilles, roulant sur la surface intérieure de la chenille et plaquant celle-ci au sol à l'aide d'un dispositif mécanique d'application de pression.

Dans ce mode de réalisation, le capteur est constitué d'une roue codeuse d'axe parallèle au sol et perpendiculaire à la direction de déplacement des chenilles, roulant sans glisser sur le sol et plaquée sur celui-ci à l'aide d'un dispositif mécanique muni de moyens de rappel.

De manière avantageuse, les axes de la roue codeuse de chaque capteur et celui de la roue du moyen d'améliorer l'adhérence au sol correspondant à ce capteur sont situés à proximité de la projection verticale du barycentre du véhicule.

Les caractéristiques essentielles de l'invention vont à présent être décrites à l'aide des figures données en annexe à titre illustratif et non limitatif, et dont l'énumération est la suivante :

– la figure 1 représente en perspective l'entraînement à chenilles d'un véhicule équipé selon un mode de réalisation de l'invention,

– la figure 2 représente une vue partielle, de l'avant, de l'entraînement à chenilles de la figure 1.

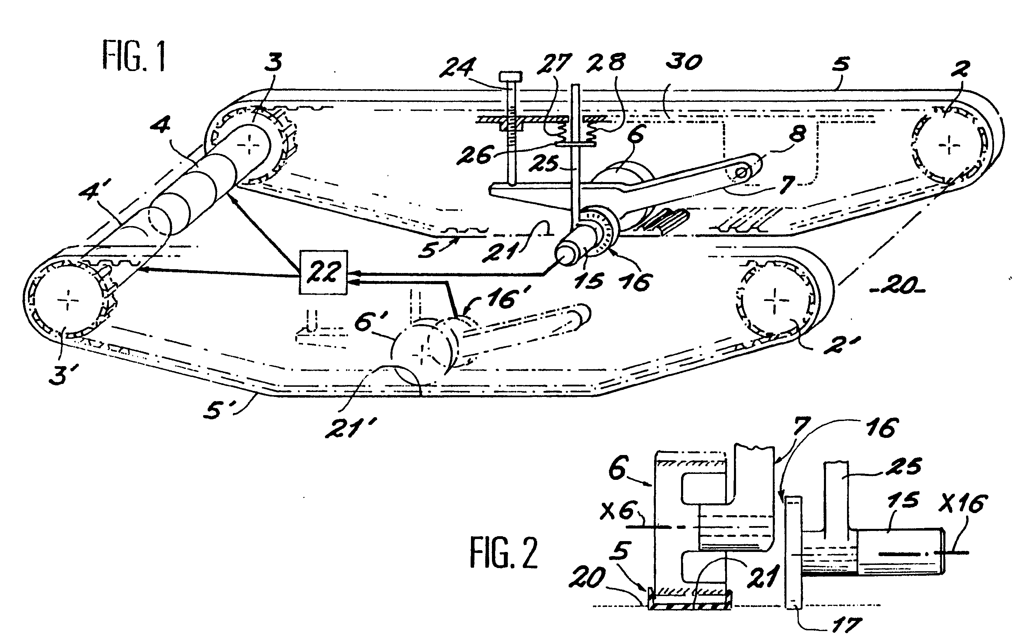

La figure 1 représente tout d'abord deux chenilles 5 et 5′ qui meuvent un véhicule disposé au-dessus d'elles et non représenté ici. Elles sont chacune disposées autour de deux roues extrêmes, respectivement 2 et 3, et 2' et 3' ; les roues 3 et 3' sont motrices et situées chacune à l'extrémité d'un groupe motoréducteur 4 et 4' commandé par un système de pilotage embarqué 22 qui permet également de connaître le mouvement du véhicule, c'est-à-dire sa vitesse et sa position.

Sur chacune des chenilles 5 et 5' est installé un moyen d'améliorer localement l'adhérence de la chenille correspondante au sol. Il se compose essentiellement d'une roue 6 d'amélioration d'adhérence qui appuie sur une partie de la surface intérieure de la chenille 5 à l'aide d'un dispositif d'application de pression tel qu'un levier 7 portant l'axe de la roue 6, articulé à une extrémité en un point 8 fixe du véhicule et maintenu à son autre extrémité par l'extrémité d'une vis de pression 24 engagée dans le châssis 30 du véhicule ; on constate donc que la portion de la chenille 5 disposée sous la roue 6 est plaquée sur une petite surface 21 contre le sol 20 avec une pression importante. Le frottement du véhicule sur le sol 20 se localise principalement sur les surfaces 21 et 21' des chenilles 5 et 5', ce qui fait que l'axe vertical de pivotement du véhicule est sécant à l'axe joignant ces surfaces quasi-ponctuelles 21 et 21'.

Dans le cas où l'on désire que les déplacements du véhicule soient mesurés par un capteur en contact avec le sol, il convient d'installer ce capteur près de la surface 21 où le déplacement du véhicule est connu avec la plus grande précision. Il comprend avantageusement une roue codeuse 16 qui roule sans glisser sur le sol 20 au moyen d'une bande adhérente 17 disposée sur sa jante (figure 2). Le dispositif sur lequel est montée la roue codeuse 16 comprend un moyen de rappel tel qu'une tige verticale 25 à l'extrémité de laquelle la roue codeuse 16 tourne et qui est munie d'un appui 26 pour des ressorts 27, 28 de compression reliés par ailleurs au châssis 30 du véhicule.

Un générateur d'impulsions optiques 15 lié à la tige 25 et disposé en face de la roue codeuse 16 transmet l'information concernant la vitesse de rotation de celle-ci au système de pilotage 22 qui asservit le motoréducteur 4. Un capteur semblable équipe l'autre chenille 5'.

Le déplacement d'ensemble du véhicule s'exprime donc en fonction de la rotation des roues codeuses 16 et 16' disposées à proximité des surfaces 21 et 21' : la moyenne de leurs déplacements correspond au déplacement longitudinal d'ensemble du véhicule, tandis que leur différence est liée au pivotement de ce véhicule. Ces informations sont calculées par le système de pilotage 22 qui en déduit les caractéristiques de mouvement du véhicule, c'est-à-dire sa vitesse longitudinale, sa vitesse de rotation et donc l'évolution de sa position après une intégration temporelle. La trajectoire réelle est constamment ajustée sur une trajectoire prédéfinie, mémorisée par le système de pilotage 22, en modifiant les vitesses communiquées aux motoréducteurs 4 et 4'.

Le capteur décrit ci-dessus présente plusieurs avantages : il est de fabrication simple et bon marché, sa fiabilité est très grande et il peut être utilisé aussi bien en marche avant qu'en marche arrière du véhicule. On peut cependant envisager l'emploi d'autres capteurs de vitesse, par exemple des capteurs acoustiques ou ultrasoniques à effet Doppler ou optiques sans contact avec le sol, tout en restant dans le cadre de l'invention.

De préférence, le dispositif d'amélioration d'adhérence au sol sur la chenille 5' et le capteur de vitesse correspondant sont disposés de façon rigoureusement symétrique à ceux qui ont été décrits pour la chenille 5. Le fonctionnement des chenilles 5 et 5' est alors identique, ce qui améliore la stabilité du véhicule.

La position latérale de l'axe de pivotement du véhicule se trouve sur un point de la droite joignant les surfaces quasi-ponctuelles 21 et 21' ; la position transversale de ce point dépend des vitesses des deux chenilles 5 et 5' appliquées par les motoréducteurs 4 et 4' à l'aide du moyen de commande 22 : ainsi, avec deux vitesses égales mais de sens opposés, l'axe de pivotement est situé à distance égale des deux chenilles, et éventuellement tout proche du barycentre du véhicule dont la stabilité est ainsi encore améliorée.

Il est donc avantageux que le barycentre du véhicule ait une projection verticale passant à proximité de la droite joignant les deux surfaces ponctuelles 21 et 21'. Il est également avantageux que cette projection verticale passe à proximité des axes de rotation X6 et X16 de la roue d'amélioration d'adhérence 6 et de la roue codeuse 16.

La présente invention permet donc de contrôler avec une grande précision les mouvements d'un véhicule à chenilles ; le dispositif d'amélioration d'adhérence au sol facilite en outre les virages en réduisant les frottements, ce qui diminue la consommation d'énergie. Ces deux avantages principaux rendent le système intéressant, notamment pour les robots à trajectoire prédéterminée utilisés dans les usines et les installations nucléaires ou pour des applications militaires.

## Revendications

1. Système de repérage de mouvement d'un véhicule à chenilles, caractérisé en ce qu'il comprend sur chaque chenille (5, 5') un moyen (6 à 8, 24) pour améliorer en un point l'adhérence de la chenille par rapport au sol, et un capteur (15, 16) de vitesse solidaire du véhicule, chaque capteur étant placé de manière à mesurer la vitesse du véhicule par rapport au sol en un point situé à proximité du point d'amélioration d'adhérence de la chenille correspondante, et un moyen de pilotage (22) permettant de déduire le mouvement du véhicule par comparaison des informations recueillies par chaque capteur.

2. Système de repérage du mouvement d'un véhicule à chenilles selon la revendication 1, caractérisé en ce que le moyen pour améliorer l'adhérence comprend une roue (6) d'amélioration d'adhérence, d'axe parallèle au sol et perpendiculaire à la direction de déplacement des chenilles (5 et 5'), roulant sur la surface intérieure de la chenille et plaquant celle-ci au sol à l'aide d'un dispositif mécanique d'application de pression (7, 24).

3. Système de repérage de mouvement d'un véhicule à chenilles selon la revendication 2, caractérisé en ce que le capteur est constitué d'une roue codeuse (16) d'axe parallèle au sol et perpendiculaire à la direction de déplacement des chenilles (5, 5'), roulant sans glisser sur le sol et plaquée sur celui-ci à l'aide d'un dispositif mécanique muni de moyens de rappel.

4. Système de repérage de mouvement d'un véhicule à chenilles selon la revendication 3, caractérisé en ce que les axes de rotation de chaque roue (6) d'amélioration d'adhérence et de chaque roue codeuse (16) correspondante passent à proximité de la projection verticale du barycentre du véhicule.

5. Système de repérage de mouvement d'un véhicule à chenilles selon la revendication 1, caractérisé en ce que les chenilles (5 et 5') sont équipées de moyens pour améliorer l'adhérence et de capteurs suivant une disposition symétrique.

## Ansprüche

1. Vorrichtung zum überwachen der Bewegungen eines Kettenfahrzeugs, **dadurch gekennzeichnet**, daß sie an jeder Kette (5, 5') eine Einrichtung (6 bis 8, 24) zum Verbessern der Bodenhaftung der Kette in einem Punkt, und einen mit dem Fahrzeug verbundenen Geschwindigkeitsaufnehmer (15, 16) aufweist, welcher derart angeordnet ist, daß er die Geschwindigkeit des Fahrzeugs bezüglich des Bodens in einem Punkt mißt, der in der Nähe des Haftungsverbesserungspunktes der entsprechenden Kette liegt, und eine Piloteinrichtung (22) aufweist, die erlaubt, die Bewegung des Fahrzeugs durch Vergleich der von jedem Aufnehmer gesammelten Information abzuleiten.

2. Vorrichtung zum überwachen der Bewegung eines Kettenfahrzeugs nach Anspruch 1, **dadurch gekennzeichnet**, daß die Einrichtung zum Verbessern der Bodenhaftung eine Druckrolle (6) mit parallel zum Boden und Lotrecht zur Bewegungsrichtung der Ketten (5, 5') verlaufender Achse aufweist, welche auf der Innenfläche der Kette abrollt und diese mit Hilfe einer mechanischen Andrückvorrichtung (7, 24) in Anlage am Boden belastet.

3. Vorrichtung zum überwachen der Bewegung eines Kettenfahrzeugs nach Anspruch 2, **dadurch gekennzeichnet**, daß der Aufnehmer eine Codierscheibe (16) mit parallel zum Boden und Lotrecht zur Bewegungsrichtung der Ketten (5, 5') verlaufender Achse aufweist, welche schlupffrei auf dem Boden abrollt und mit Hilfe einer eine Aufhohleinrichtung aufweisenden mechanischen Einrichtung in Anlage am Boden belastet ist.

4. Vorrichtung zum überwachen der Bewegung eines Kettenfahrzeugs nach Anspruch 3, **dadurch gekennzeichnet**, daß die Drehachsen jeder Druckrolle (6) zum Verbessern der Bodenhaftung und jeder zugeordneten Codierscheibe (16) in der Nähe der vertikalen Projektion des Druckzentrums des Fahrzeugs verlaufen.

5. Vorrichtung zum überwachen der Bewegung eines Kettenfahrzeugs nach Anspruch 1, **dadurch gekennzeichnet**, daß die Ketten (5, 5') in einer symmetrischen Anordnung mit den Einrichtungen zum Verbessern der Bodenhaftung und den Aufnehmern versehen sind.

## Claims

1. Caterpillar vehicle movement determination system, characterized in that it comprises on each caterpillar (5, 5') a means (6 to 8, 24) for improving at one point the adhesion of the caterpillar relative to the ground and a speed sensor (15, 16) integral with the vehicle, each sensor being positioned so as to measure the speed of the vehicle relative to the ground at a point in the vicinity of the corresponding caterpillar adhesion improvement point and a control means (22) making it possible to deduce the movement of the vehicle by comparing informations collected by each sensor.

2. Caterpillar vehicle movement determination system according to claim 1, characterized in that the adhesion improvement means comprises an adhesion improvement wheel (6), whose axis is parallel to the ground and perpendicular to the displacement direction of the caterpillars (5, 5') running on the inner surface of the caterpillar and engaging the latter with the ground with the aid of a mechanical pressure application device (7, 24).

3. Caterpillar vehicle movement determination system according to claim 2, characterized in that the sensor is constituted by a coding wheel (16), whose axis is parallel to the ground and perpendicular to the displacement direction of the caterpillars (5, 5'), running without sliding on the ground and engaged therewith with the aid of a mechanical device equipped with return means.

4. Caterpillar vehicle movement determination

**EP 0 277 447 B1**

system according to claim 3, characterized in that the rotation axes of each adhesion improvement wheel (6) and each corresponding coding wheel (16) pass in the vicinity of the vertical projection of the barycentre of the vehicle.

5. Caterpillar vehicle movement determination system according to claim 1, characterized in that the caterpillars (5, 5') are equipped with means for improving adhesion and sensors in a symmetrical arrangement.

FIG. 1

FIG. 2

EP 0 277 447 B1